# EUROPÄISCHE PATENTSCHRIFT

(11) **EP 3 371 022 B1**
(45) Veröffentlichungstag und Bekanntmachung des Hinweises auf die Patenterteilung: **11.12.2024**
(21) Anmeldenummer: 16784170.9
(22) Anmeldetag: 18.10.2016
(51) Int. Cl.: B60W 30/18, G08G 1/16, B62D 15/02, B60W 50/14

(54) **VERFAHREN UND REGELUNGSSYSTEME ZUR BESTIMMUNG EINER VERKEHRSLÜCKE ZWISCHEN ZWEI FAHRZEUGEN FÜR EINEN FAHRSTREIFENWECHSEL FÜR EIN FAHRZEUG**
METHOD AND AUTOMATIC CONTROL SYSTEMS FOR DETERMINING A GAP IN TRAFFIC BETWEEN TWO VEHICLES FOR A LANE CHANGE OF A VEHICLE
PROCÉDÉS ET SYSTÈMES DE RÉGULATION POUR LA DÉTERMINATION D'UN INTERVALLE ENTRE DEUX VÉHICULES POUR UN CHANGEMENT DE FILE D'UN VÉHICULE

(30) Priorität: 04.11.2015 DE 102015014142; 29.03.2016 DE 102016205140
(43) Veröffentlichungstag der Anmeldung: 12.09.2018
(73) Patentinhaber: Volkswagen Aktiengesellschaft, 38440 Wolfsburg (DE)
(72) Erfinder: BUBURUZAN, Teodor, 38118 Braunschweig (DE); ENGEL, Monique, 38110 Braunschweig (DE); RECH, Bernd, 38556 Bokensdorf (DE); GLÄSER, Stefan, 38104 Braunschweig (DE); LEHMANN, Bernd, 38444 Wolfsburg (DE); KLEINAU, Sandra, 38531 Rötgesbüttel (DE); GÜNTHER, Hendrik-Jörn, 30173 Hannover (DE)
(86) Internationale Anmeldenummer: PCT/EP2016/074958
(87) Internationale Veröffentlichungsnummer: WO 2017/076636

(56) Entgegenhaltungen:
- DE-A1- 102009 027 535
- DE-A1- 102010 052 406
- DE-A1- 102010 052 406
- DE-A1- 102012 011 994
- DE-A1- 102012 011 994
- DE-A1- 102012 023 107
- DE-A1- 102012 023 361
- DE-A1- 102012 023 361
- DE-A1- 102012 218 935

## Beschreibung

Die Erfindung bezieht sich auf Verfahren und Systeme zur Bestimmung einer Verkehrslücke zwischen zwei Fahrzeugen für einen Fahrstreifenwechsel für ein Fahrzeug, genauer, aber nicht ausschließlich, basierend auf einer Nutzung von Fahrzeug-zu-Fahrzeug-Nachrichten und Sensordaten zur Bestimmung der Verkehrslücke.

Fahrzeug-zu-Fahrzeug-Kommunikation (auch engl. Car2Car, C2C, oder Vehicle2Vehicle, V2V) und Fahrzeug-zu-Infrastruktur-Kommunikation (auch engl. Car2lnfrastructure, C2I oder Vehicle2Roadside, V2R) sind ein Brennpunkt automobiler Forschung im 21. Jahrhundert. Die Kommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Kommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Kommunikation, engl. Car2X, C2X oder Vehicle2X, V2X) ausgebildet sind eine Sende- und Empfangseinheit um mit anderen Fahrzeugen kommunizieren zu können, beispielsweise über direkte Funkverbindungen oder Mobilfunknetzwerke. Die Kommunikation kann dabei beispielsweise zwischen Fahrzeugen oder zwischen Fahrzeugen und Verkehrsinfrastruktur innerhalb eines Radius von wenigen hundert Metern begrenzt sein.

Eine Koordination von Fahrzeugen, beispielsweise zum kooperativen Ausführen von Fahrmanövern oder zur Koordination von automatisierten Fahrzeugen, ist häufig abhängig von einer Verfügbarkeit von Nachrichten der kooperierenden Fahrzeuge und von einer Qualität der Daten. Sind Fahrzeuge nicht mit Fahrzeug-zu-Fahrzeug-Kommunikationssystemen ausgestattet, so werden sie in kooperativen Fahrsituationen häufig nicht einbezogen.

Die Patentanmeldung DE 10 2012 023 107 A1 zeigt ein Verfahren zum Betrieb eines Fahrassistenzsystems eines Kraftfahrzeugs. Dabei wird eine zum Einfädeln in eine Spur geeignete Lücke durch ein Kraftfahrzeug identifiziert und eine Geschwindigkeit berechnet, die ein Einfädeln in die Lücke ermöglicht. Diese Geschwindigkeit wird dem Fahrer des Kraftfahrzeugs angezeigt oder, alternativ, das Fahrzeug direkt mit dieser Geschwindigkeit betrieben.

Die Patentanmeldung DE 10 2012 011 994 A1 bezieht sich auf ein Verfahren zur Unterstützung von Fahrassistenz- und/oder Sicherheitsfunktionen von Kraftfahrzeugen. Bei dem dort vorgestellten Verfahren zum kooperativen Steuern einer Verkehrssituation mit mindestens zwei Fahrzeugen, die mittels eines C2C-Kommunikationssystems Informationen zwischen den mindestens zwei Fahrzeugen austauschen, wobei die ausgetauschten Informationen zur Beeinflussung des Fahrverhaltens der beteiligten Fahrzeuge dienen, wird als auszutauschende Information zusätzlich zum aktuellen Fahrverhalten und aktuellen Fahrinformationen ein von einem ersten Fahrzeug beabsichtigtes Fahrverhalten an ein zweites Fahrzeug der mindesten zwei Fahrzeuge übertragen. Aufgrund der Information über das beabsichtigte Fahrverhalten passt das zweite Fahrzeug sein Fahrverhalten an das beabsichtigte Fahrverhalten des ersten Fahrzeugs an.

Es besteht der Bedarf nach einem verbesserten Konzept zur Unterstützung von kooperativen Fahrfunktionen. Diesem Bedarf wird durch die Verfahren und Regelungssysteme gemäß den unabhängigen Ansprüchen Rechnung getragen.

Ausführungsbeispiele schaffen ein Verfahren zur automatisierten Bestimmung einer Verkehrslücke zum Fahrstreifenwechsel für ein Fahrzeug. Das Fahrzeug oder ein Fahrzeug-zu-Fahrzeug-Kommunikationssystem des Fahrzeugs ist ausgebildet, sowohl Fahrzeug-zu-Fahrzeug-Nachrichten als auch lokale Sensoren zur Bestimmung von Verkehrslücken zu nutzen. Durch eine Kombination der Daten kann das Fahrzeug sowohl Fahrzeuge, die mit einem Fahrzeug-zu-Fahrzeug-Kommunikationssystem ausgestattet sind, als auch Fahrzeuge ohne Fahrzeug-zu-Fahrzeug-Kommunikationssystem oder Hindernisse erfassen, und basierend darauf einen Fahrstreifenwechselautomatisiert durchführen oder unterstützen. Ist keine Lücke vorhanden, so kann das Verfahren Fahrintentionsnachrichten Fahrzeugen in einer Umgebung bereitstellen, damit diese eine Lücke schaffen.

Ausführungsbeispiele schaffen ein Verfahren zur Bestimmung einer Verkehrslücke zwischen zwei Fahrzeugen für einen Fahrstreifenwechsel für ein Fahrzeug. Das Verfahren kann in manchen Ausführungsbeispielen automatisiert durchgeführt werden. Das Verfahren umfasst Identifizieren der Verkehrslücke basierend auf einer ersten Detektion und basierend auf einer zweiten Detektion. Die erste Detektion basiert auf zumindest einer Fahrzeug-zu-Fahrzeug-Statusnachricht zumindest eines weiteren Fahrzeugs. Die zweite Detektion basiert auf einer Bordsensorik des Fahrzeugs. Das Nutzen der Fahrzeug-zu-Fahrzeug-Statusnachricht und der Bordsensorik ermöglicht ein Bestimmen der Verkehrslücke in einer heterogenen Verkehrssituation aus zur Fahrzeug-zu-Fahrzeug-Kommunikation ausgebildeten Fahrzeugen und Fahrzeugen ohne Fahrzeug-zu-Fahrzeug-Schnittstelle sowie eine Erkennung von Störkörpern. Das Verfahren umfasst ferner ein Ermitteln, dass das Identifizieren keine Verkehrslücke umfasst. Das Verfahren umfasst ferner ein Senden einer Fahrintentionsnachricht basierend auf dem Ermitteln, dass das Identifizieren keine Verkehrslücke umfasst. Dabei umfasst die Fahrintentionsnachricht eine Information über einen zukünftigen Fahrstreifenwechselwunsch des Fahrzeugs. Das Bereitstellen der Fahrintentionsnachricht kann eine Kooperation von Fahrzeugen zum Ermöglichen oder Vereinfachen eines Fahrstreifenwechselvorgangs ermöglichen.

In einigen Ausführungsbeispielen kann die zumindest eine Fahrzeug-zu-Fahrzeug-Statusnachricht Information über eine Position und/oder eine Trajektorie des zumindest einen weiteren Fahrzeugs umfassen. Die erste Detektion kann auf der Information über die Position und/oder die Trajektorie des zumindest einen weiteren Fahrzeugs basieren. Die Nutzung der Position oder Trajektorie ermöglicht ein Berechnen einer Positions-Karte von Fahrzeugen in einer Umgebung des Fahrzeugs.

In manchen Ausführungsbeispielen kann das Identifizieren ferner auf einer dritten Detektion basieren. Die dritte Detektion kann auf Fahrzeug-zu-Fahrzeug-Nachrichten mit Umfeldinformationen des zumindest einen weiteren Fahrzeugs basieren. Die Umfeldinformationen können auf Sensoraufnahmen eines Umfelds des zumindest einen weiteren Fahrzeugs von zumindest einem bordeigenen Sensor des zumindest einen weiteren Fahrzeugs basieren. Eine Nutzung der Umfeldinformationen des zumindest einen weiteren Fahrzeugs ermöglicht ein Vergrößern eines virtuellen Abdeckungsbereichs der Sensorwahrnehmung, die zum Zweck der Verkehrslückenerkennung genutzt werden kann.

Das Verfahren umfasst ferner ein Längsregeln des Fahrzeugs parallel zur identifizierten Verkehrslücke. Zusätzlich kann das Verfahren ferner ein Querregeln des Fahrzeugs durch einen Fahrstreifenwechsel parallel zu der identifizierten Verkehrslücke umfassen. Das Längsregeln ermöglicht ein platzieren des Fahrzeugs parallel zur identifizierten Verkehrslücke, und kann beispielsweise einen Fahrer des Fahrzeugs entlasten und eine Verkehrssicherheit erhöhen. Das Querregeln ermöglicht den Fahrstreifenwechsel und kann ebenfalls den Fahrer des Fahrzeugs entlasten und die Verkehrssicherheit erhöhen.

In manchen Ausführungsbeispielen kann das Längsregeln einem Regeln einer Geschwindigkeit oder Position des Fahrzeugs in Fahrtrichtung entsprechen. Das Längsregeln kann beispielsweise ein Bereitstellen eines Geschwindigkeits-Zeit-Verlaufs für einen adaptiven Abstandsregeltempomaten umfassen. Alternativ oder zusätzlich kann das Längsregeln ein Anzeigen einer Längsregelhilfe für einen Fahrer des Fahrzeugs umfassen. Alternativ oder zusätzlich kann das Längsregeln, wenn das Fahrzeug einem automatisch fahrenden Fahrzeug entspricht, einer Längsregelung des automatisch fahrenden Fahrzeugs basierend auf der identifizierten Verkehrslücke entsprechen. Das Längsregeln ermöglicht ein Platzieren des Fahrzeugs parallel und benachbart zur identifizierten Verkehrslücke, beispielsweise auf einem Fahrstreifen, der parallel zu dem Fahrstreifen der Verkehrslücke verläuft. Die Nutzung eines Abstandsregeltempomaten kann einen Fahrer entlasten und es ermöglichen, eine zum einscheren oder einfädeln nutzbare Position einzunehmen. Das Anzeigen der Längsregelhilfe kann es einem Fahrer eines Fahrzeugs, das nicht mit einem Abstandsregeltempomaten ausgestattet ist, ermöglichen, die Unterstützung des Verfahrens in Anspruch zu nehmen. Die Längsreglung des automatisch fahrenden Fahrzeugs kann ferner den Fahrer entlasten und ein automatisches Fahren in Einfädelsituationen ermöglichen.

In einigen Ausführungsbeispielen kann das Querregeln einem Regeln einer Position des Fahrzeugs quer zur Fahrtrichtung entsprechen. Beispielsweise kann das Querregeln durchgeführt werden, wenn das Längsregeln das Fahrzeug parallel zur identifizierten Verkehrslücke positioniert hat. Das Querregeln kann beispielsweise einen fahrerinitiierten automatisierten Fahrstreifenwechsel umfassen. Alternativ oder zusätzlich kann das Querregeln ein Anzeigen einer Querregelhilfe für einen Fahrer des Fahrzeugs umfassen. Alternativ oder zusätzlich kann das Querregeln, wenn das Fahrzeug einem automatisch fahrenden Fahrzeug entspricht, einer Querregelung des automatisch fahrenden Fahrzeugs entsprechen. Das Querregeln ermöglicht einen Fahrstreifenwechsel, ein Einfädeln oder ein Einscheren des Fahrzeugs in die identifizierte Verkehrslücke. Die Nutzung des fahrerinitiierten automatisierten Fahrstreifenwechsels kann einen Fahrer entlasten und einen teilautomatisierten Fahrstreifenwechselvorgang ermöglichen. Das Anzeigen der Querregelhilfe kann es einem Fahrer eines Fahrzeugs, das nicht mit einem Abstandsregeltempomaten ausgestattet ist, ermöglichen, die Unterstützung des Verfahrens in Anspruch zu nehmen. Die Querregelung des automatisch fahrenden Fahrzeugs kann ferner den Fahrer entlasten und ein automatisches Fahren in Fahrstreifenwechselsituationen ermöglichen.

In manchen Ausführungsbeispielen kann das Verfahren ferner ein Bestimmen einer Fahrintention eines Fahrers des Fahrzeugs zum Fahrstreifenwechsel, etwa zum Einfädeln, umfassen. Das Verfahren kann ferner ein Senden einer Fahrintentionsnachricht basierend auf dem Erkennen der Absicht umfassen. Das Bereitstellen der Fahrintentionsnachricht kann eine Kooperation von Fahrzeugen zum Ermöglichen oder Vereinfachen eines Fahrstreifenwechselvorgangs ermöglichen.

Ausführungsbeispiele schaffen ferner ein System für ein Fahrzeug, ausgebildet zum Identifizieren der Verkehrslücke zwischen zwei Fahrzeugen basierend auf einer ersten Detektion und basierend auf einer zweiten Detektion. Die erste Detektion basiert auf zumindest einer Fahrzeug-zu-Fahrzeug-Statusnachricht zumindest eines weiteren Fahrzeugs. Die zweite Detektion basiert auf einer Bordsensorik des Fahrzeugs. Das System ist ausgebildet zum Ermitteln, dass das Identifizieren keine Verkehrslücke umfasst. Das System ist ausgebildet zum Senden einer Fahrintentionsnachricht basierend auf dem Ermitteln, dass das Identifizieren keine Verkehrslücke umfasst. Dabei umfasst die Fahrintentionsnachricht eine Information über einen zukünftigen Fahrstreifenwechselwunsch des Fahrzeugs. Das System ist ferner ausgebildet zum Längsregeln des Fahrzeugs parallel zur identifizierten Lücke und kann ausgebildet sein zum Querregeln des Fahrzeugs durch einen Fahrstreifenwechsel parallel zu der identifizierten Lücke.

Ausführungsbeispiele schaffen ferner ein Fahrzeug, umfassend das System.

Ausführungsbeispiele schaffen ferner ein Programm mit einem Programmcode zum Durchführen des Verfahrens wenn der Programmcode auf einem Computer, einem Prozessor, einem Kontrollmodul oder einer programmierbaren Hardwarekomponente ausgeführt wird. Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Flussdiagramm eines Ausführungsbeispiels eines Verfahrens zur Bestimmung einer Verkehrslücke zwischen zwei Fahrzeugen für einen Fahrstreifenwechsel für ein Fahrzeug;
- Fig. 1a: zeigt ein Blockdiagramm eines Ausführungsbeispiels eines Regelungssystems ausgebildet zur Bestimmung einer Verkehrslücke zwischen zwei Fahrzeugen für einen Fahrstreifenwechsel für ein Fahrzeug;
- Fig. 1b: illustriert ein Flussdiagramm eines weiteren Ausführungsbeispiels des Verfahrens;
- Fig. 2: zeigt verschiedene Stufen von V2X-Fähigkeiten eines Fahrzeugs;
- Fign. 3a-e: zeigen ein beispielhaftes Ausführungsbeispiel.
- Fig. 4: zeigt ein Flussdiagramm einer beispielhaften Implementierung des Verfahrens;
- Fig. 5: illustriert ein Flussdiagramm eines Verfahrens für ein Fahrzeug, wobei das Verfahren nicht in den Bereich der Ansprüche fällt; und
- Fig. 5a: illustriert ein Blockdiagramm eines Regelungssystems , welches nicht unter den Schutzbereich der Ansprüche fällt, für ein Fahrzeug

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung wie in den Ansprüchen definiert liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Zur Verbesserung eines Verkehrsflusses, Vermeidung von Verkehrsunfällen und Erhöhung des Fahrkomforts können in Ausführungsbeispielen kooperative Fahrfunktionen genutzt werden.

Hierbei findet die V2X-Technologie Anwendung, die eine direkte oder indirekte (mittels eine Basisstation) Kommunikation zwischen Fahrzeugen ermöglicht. Durch die Kommunikation von Status-, Umfeld und Intentionsinformationen eines Fahrzeugs besteht das Potenzial, neuartige Sicherheits- und Komfortfunktionen zu realisieren.

Zumindest manche Ausführungsbeispiele betreffen eine kooperative Fahrfunktion, die das Einfädeln auf eine Autobahn oder in freie Lücken beim Einscheren und/oder einen Fahrstreifenwechsel mit kooperativem Fahren ermöglicht. Ausführungsbeispiele können eine Verbesserung eines kooperativen ACC zu darstellen. Ausführungsbeispiele können beim Fahrstreifenwechsel, Einfädeln auf die Autobahn oder Einscheren in freie Lücken eine Komfort-Erhöhung durch die automatisierte Anpassung der Längsregelung auf eine ausgewählte Lücke schaffen. Mit der V2X-Technologie und damit der Kommunikation der oben genannten Informationen kann die frühzeitige Erfassung einer Lücke umgesetzt werden.

Kooperatives Fahren bezeichnet ein Verhalten im Straßenverkehr, bei dem sich die Verkehrsteilnehmer durch geeignete Anpassung des eigenen Fahrverhaltens gegenseitig geplante Manöver ermöglichen, erleichtern oder unterstützen. Kooperation kann zwischen verschiedenen Arten von Fahrzeugen stattfinden (Personenkraftwagen [PKW], Nutzfahrzeuge [NFZ], Zweiräder etc.). In dieser Beschreibung wird am Beispiel des kooperativen Fahrstreifenwechsels auf eine Autobahn eine kooperative Fahrfunktion beschrieben, die das kooperative Fahrstreifenwechseln ermöglicht. Das Konzept ist allgemein für Fahrstreifenwechsel gültig und ist auf Situationen wie Fahrstreifenwechsel vor einem Fahrstreifenende, vor einer Fahrstreifensperrung, vor einer Fahrstreifenverengung, aufgrund einer geplanten Route usw. anwendbar.

Bei dem sogenannten "kooperativen Einfädeln" bzw. "kooperativen Fahrstreifenwechsel" lassen sich zwei unterschiedliche Fahrzeug-Rollen im Straßenverkehr definieren: Diejenige des Verkehrsteilnehmers, der um eine Kooperation beim Fahrstreifenwechsels bittet oder anfragt bzw. eine Kooperation anfordert (Request) und diejenige des Verkehrsteilnehmers, der die Bitte erfüllt bzw. die Anforderung akzeptiert (Accept). Das Anfordern und Akzeptieren kann explizit durch den Austausch entsprechender Nachrichten stattfinden oder implizit aufgrund einer Situationsanalyse. Im Beispiel Auffahren auf eine Autobahn ist das Request-Fahrzeug jenes, welches sich auf dem Einfädel-/Beschleunigungsstreifen befindet. Das Accept-Fahrzeug fährt auf der Autobahn auf dem Fahrstreifen, auf den eingefädelt werden soll.

In der Rolle des Request-Fahrzeugs lässt sich die Funktion in drei verschiedene Phasen gliedern:
1. Eine geeignete Lücke finden (Wahrnehmung),
2. Die geeignete Lücke anfahren bzw. auf die Lücke regeln (Längsregelung),
3. In die Lücke Fahrstreifenwechsel durchführen (Querregelung).

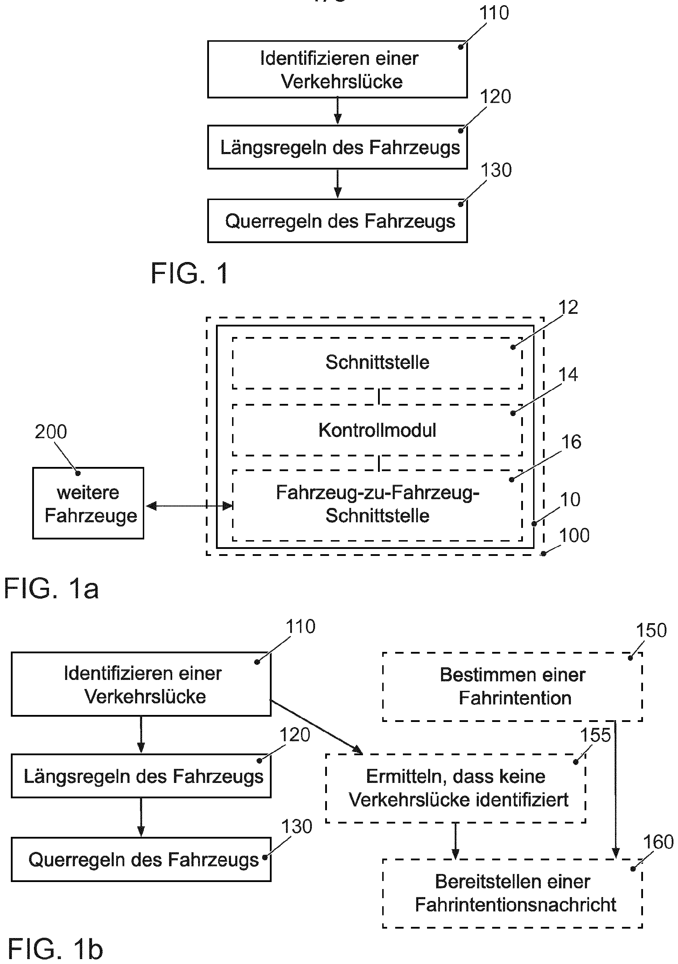

Den drei verschiedenen Phasen liegen unterschiedliche Technologien zugrunde. Die erste Phase ist die Wahrnehmungsphase, die einem Verfahrensschritt 110 aus Fig. 1 entsprechen kann. Das Fahrzeug erzeugt sich beispielsweise durch bordeigene Sensorinformationen und empfangene Umfeld- und Statusinformationen (z. B. Positionen und Geschwindigkeiten von V2X-Fahrzeugen sowie deren Abstände zu anderen Fahrzeugen) ein eigenes Modell der Fahrzeugumwelt und identifiziert so eine geeignete Lücke zwischen zwei Fahrzeugen.

Die zweite sowie auch die dritte Phase können beispielsweise Aktor-basiert sein.

In der zweiten Phase positioniert sich das Fahrzeug beispielsweise parallel zur anvisierten Lücke. Die zweite Phase kann beispielsweise den Verfahrensschritt 120 von Fig. 1 umfassen oder diesem entsprechen. Dieses Manöver kann beispielsweise entweder der Fahrer ausführen, unterstützt durch ein geeignetes HMI (Human-Machine-Interface, Mensch-Maschine-Schnittstelle), oder es kann beispielsweiseautomatisiert erfolgen. Aus Gründen der Fahrerbelastung wird in der Praxis vermutlich die automatisierte Anpassung der Fahrzeuggeschwindigkeit bevorzugt werden. In diesem Fall könnten beispielsweise die Parameter eines ACC geeignet automatisch angepasst werden. Danach, in der dritten Phase, die dem Verfahrensschritt 130 aus Fig. 1 entsprechen kann, kann über die Querregelung in die ausgewählte Lücke eingefädelt werden. Diese dritte Phase kann je nach Automatisierungsgrad wieder automatisiert oder manuell durchgeführt werden.

Fig. 1 illustriert ein Flussdiagramm eines Ausführungsbeispiels eines Verfahrens zur Bestimmung einer Verkehrslücke zum Fahrstreifenwechsel für ein Fahrzeug 100, beispielsweise als kooperative Einfädelassistenz. Der Fahrstreifenwechsel kann beispielsweise einem Einfädeln, Ausscheren oder Überholen entsprechen. Fig. 1a zeigt ein Blockdiagramm eines Ausführungsbeispiels eines Fahrzeug-zu-Fahrzeug-Kommunikationssystems 10, ausgebildet zum Ausführen des Verfahrens. Fig. 1b zeigt ein Flussdiagramm eines erweiterten Ausführungsbeispiels des Verfahrens.

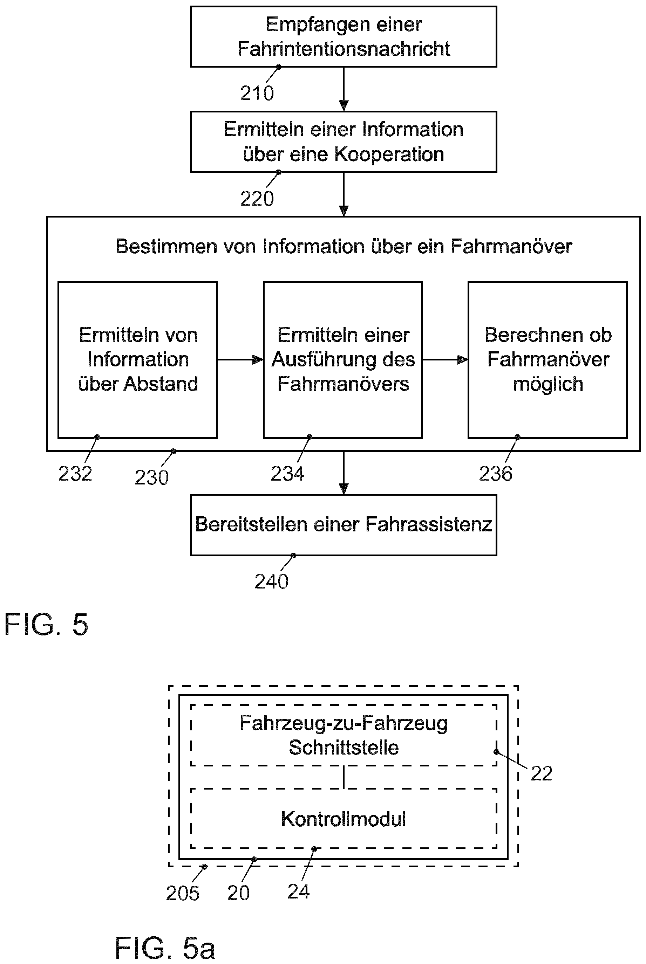

In zumindest manchen Ausführungsbeispielen könnte das Fahrzeug 100, zumindest ein weiteres Fahrzeug 200 und/oder ein Fahrzeug 205 aus Fig. 5, beispielsweise einem Landfahrzeug, einem Straßenfahrzeug, einem Auto, einem Geländefahrzeug, einem Kraftfahrzeug, oder einem Lastkraftfahrzeug entsprechen.

Das Verfahren umfasst Identifizieren 110 der Verkehrslücke basierend auf einer ersten Detektion und basierend auf einer zweiten Detektion. Die erste Detektion basiert auf zumindest einer Fahrzeug-zu-Fahrzeug-Statusnachricht zumindest eines weiteren Fahrzeugs 200. Die zweite Detektion basiert auf einer Bordsensorik des Fahrzeugs 100.

In zumindest manchen Ausführungsbeispielen kann die zumindest eine Fahrzeug-zu-Fahrzeug-Statusnachricht einer Statusnachricht entsprechen, die von dem zumindest einen weiteren Fahrzeug 200 periodisch bereitgestellt wird, um Fahrzeugen in einer Umgebung Informationen über das Fahrzeug bereitzustellen, beispielsweise eine Position, eine Geschwindigkeit, eine Trajektorie, und/oder einen Fahrzeugtyp. Das Verfahren kann beispielsweise ferner ein Erhalten der zumindest einen Fahrzeug-zu-Fahrzeug-Statusnachricht über eine Fahrzeug-zu-Fahrzeug-Schnittstelle, etwa eine Fahrzeug-zu-Fahrzeug-Schnittstelle 16 der Vorrichtung 10, umfassen.

In einigen Ausführungsbeispielen kann die zumindest eine Fahrzeug-zu-Fahrzeug-Statusnachricht Information über eine Position und/oder eine Trajektorie des zumindest einen weiteren Fahrzeugs 200 umfassen, beispielsweise relativ zum Fahrzeugs 100 oder absolut in einem globalen oder regionalen Koordinatensystem. Die erste Detektion kann auf der Information über die Position und/oder die Trajektorie des zumindest einen weiteren Fahrzeugs 200 basieren. Beispielsweise kann das Identifizieren 110 ferner ein Berechnen einer Karte mit den Positionen und/oder Trajektorien des zumindest einen weiteren Fahrzeugs 200 umfassen.

Die Fahrzeug-zu-Fahrzeug-Schnittstelle, etwa die Fahrzeug-zu-Fahrzeug-Schnittstelle 16 und/oder eine Fahrzeug-zu-Fahrzeug-Schnittstelle 22 aus Fig. 5a, kann beispielsweise ausgebildet sein, über einen geteilten Kommunikationskanal zu kommunizieren (auch engl. shared channel, broadcast channel), und die Fahrzeug-zu-Fahrzeug-Schnittstelle 16; 22 kann ausgebildet sein, die zumindest eine Fahrzeug-zu-Fahrzeug-Statusnachricht als Nachricht an mehrere Empfänger (auch engl. Broadcast) zu erhalten. In einigen Ausführungsbeispielen kann eine Fahrzeug-zu-Fahrzeug-Kommunikation der Fahrzeug-zu-Fahrzeug-Schnittstelle entweder einer direkten drahtlosen Kommunikationsverbindung zwischen zwei Fahrzeugen, beispielsweise ohne den Einsatz einer Basisstation, entsprechen, etwa gemäß IEEE 802.11p (einem Standard des Institute of Electrical and Electronics Engineers, Institut für Elektroingenieure) oder mittels eines Basisstation. Die Fahrzeug-zu-Fahrzeug-Schnittstelle 16; 22 kann beispielsweise ausgebildet sein, drahtlos direkt mit weiteren Fahrzeugen in einer Umgebung zu kommunizieren.

In zumindest manchen Ausführungsbeispielen kann die Bordsensorik zumindest ein Element der Gruppe von Kamerasensor, Radarsensor, Lidarsensor, Laufzeitsensor umfassen.

Das Identifizieren 110 der Verkehrslücke kann in zumindest manchen Ausführungsbeispielen beispielsweise durch Auswerten der Statusnachrichten eine Karte von Positionen und Trajektorien des zumindest einen weiteren Fahrzeugs 200 bestimmen. Diese Karte von Positionen kann das Identifizieren 110 durch die zweite Detektion über die Bordsensorik ergänzen, präzisieren oder verifizieren. Basierend auf dieser zweistufigen Detektion kann das Identifizieren eine detailliertere Karte von Positionen des zumindest einen weiteren Fahrzeugs 200 und anderen Fahrzeugen oder Hindernissen bestimmen. Ist die Karte erstellt, wo kann das Identifizieren 110 ferner ein Berechnen der Verkehrslücke oder mehrerer Verkehrslücken durchführen, beispielsweise basierend auf der Karte und einer Länge des zumindest einen weiteren Fahrzeugs 200, die in den Statusnachrichten umfasst sein kann, oder basierend auf Sensordaten der eigenen Bordsensorik oder von entfernten Fahrzeugen.

Gemäß der Erfindung findet die erste Detektion vor der zweiten Detektion statt. Nicht in den Bereich der Ansprüche fallen Beispiele, in denen die erste Detektion und die zweite Detektion nebenläufig durchgeführt werden. Beispielsweise können die erste Detektion und die zweite Detektion während der Laufzeit des Verfahrens durchgeführt werden und regelmäßig oder unregelmäßig Ergebnisse der Detektion bereitstellen.

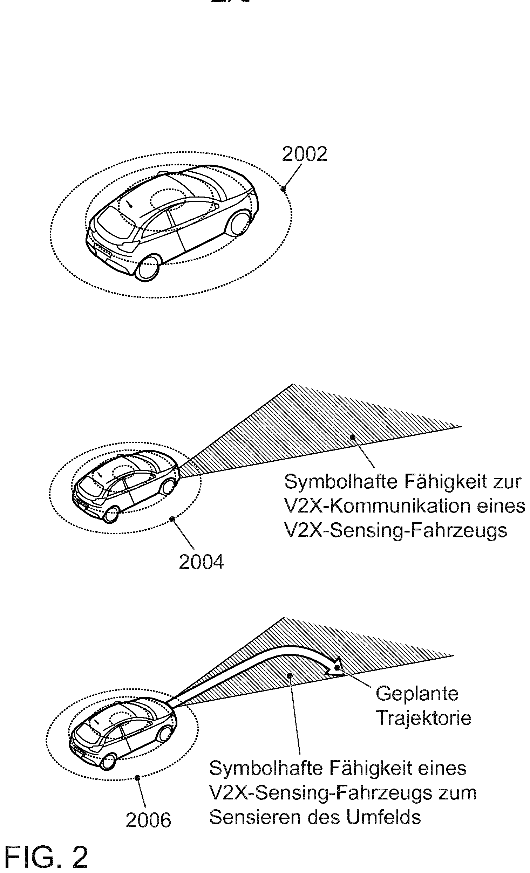

Für das Identifizieren 110 lassen sich in manchen Ausführungsbeispielen verschiedene Varianten der V2X-Fahrzeugausstattung, etwa durch das Fahrzeug-zu-Fahrzeug-Kommunikationssystem 10 und/oder die Fahrzeug-zu-Fahrzeug-Schnittstelle 16 unterscheiden. V2X-Fahrzeuge sind in manchen Ausführungsbeispielen mit einem V2X-Basissystem ausgestattet. Sie senden und empfangen Statusnachrichten (Cooperative Awareness Messages, CAM, vgl. ETSI EN 302 637-2 v1.3.0 bzw. Basic Safety Message, BSM) und können diese verarbeiten. Fig. 2 2002 zeigt ein V2X-Fahrzeug mit V2X-Basissystem. Statusnachrichten enthalten u.a. die Position, Geschwindigkeit, Fahrtrichtung und Beschleunigung des sendenden Fahrzeugs. Bei niedriger bis mittlerer Penetration von V2X-Fahrzeugen auf der Straße kann auf Basis von ausschließlich Statusinformationen möglicherweise keine Lücke zum Fahrstreifenwechsel bestimmt werden. Bei hoher Penetration von V2X-Fahrzeugen kann auf Basis von ausschließlich Statusinformationen eine Lücke zum Fahrstreifenwechsel in manchen Ausführungsbeispielen nicht exakt durch das Identifizieren 110 bestimmt werden, sondern nur die Wahrscheinlichkeit ihrer Existenz. Der Grund für die Unsicherheit ist, dass sich zwischen den V2X-Fahrzeugen sowohl Lücken, als auch nicht ausgestattete Fahrzeuge befinden können. Dies lässt sich ausschließlich auf Basis von Statusinformationen nicht unterscheiden. Bei einer 100%-igen Ausstattung der Fahrzeuge mit dem V2X-Basissystem sind Abstände zwischen zwei Fahrzeugen möglicherweise aus den Statusinformationen ableitbar, wenn die Fahrzeuglängen bekannt sind (inklusiver eventueller Anhänger oder Auflieger). Die Berechnung der Abstände und damit der Lückengrößen zwischen zwei Fahrzeugen kann im Identifizieren durch Auswertung der übermittelten Fahrzeugpositionen im Request-Fahrzeug 110 erfolgen. Die vollständige Ausstattung aller Fahrzeuge mit einem V2X-System und die gleichzeitige Kenntnis der Fahrzeuglängen ist für die Praxis möglicherweise nicht voraussetzbar.

Die Genauigkeit der Lückenabschätzung im Identifizieren 110 kann umso größer sein, je höher die V2X-Penetrationsrate ist. Zur Generierung eines vollständigen Bildes der Verkehrssituation kann daher die bordeigene Sensorik zusätzlich herangezogen werden. In Kombination von bordeigener Sensorik und V2X-Statusnachrichten würde die Wahrnehmung bei der Funktion Fahrstreifenwechselassistent in manchen Ausführungsbeispielen in zwei Schritten stattfinden. Solange die bordeigene Sensorik den Straßenbereich des geplanten/möglichen Fahrstreifenwechselmanövers nicht erfassen kann (z. B. wegen Verdeckung oder zu großer Entfernung), bestimmt das Identifizieren 110 durch das Fahrzeugsystem bzw. das Fahrzeug-zu-Fahrzeug-Kommunikationssystem 10 auf Basis der V2X-Statusnachrichten den Bereich im ankommenden Verkehr, in dem mit einer ausreichend hohen Wahrscheinlichkeit eine Lücke zu finden sein wird (Grobdetektion). Auf diese "Wahrscheinliche Lücke" basiert das Request-Fahrzeug in einem Längsregeln 120 seine Längsregelung und fährt diese an. Wenn der Bereich "Wahrscheinliche Lücke" in den Erfassungsbereich der Bordsensorik gekommen ist, geschieht eine genauere Detektion und Bewertung der vorhandenen Lücken (Feindetektion).

V2X-Fahrzeuge können zusätzlich zu den Statusnachrichten in manchen Ausführungsbeispielen auch Nachrichten mit Umfeldinformationen senden, welche sie mithilfe ihrer bordeigenen Sensoren gewonnen haben (z. B. detektierte Objekte). Fig. 2 2004 zeigt eine symbolhafte Darstellung der Fähigkeit zur V2X-Kommunikation eines V2X-Sensing-Fahrzeugs, ausgebildet zum Senden/Empfangen von Nachrichten mit Umfeldinformation. Dies wird als kollektive Perzeption oder "Environmental Perception Message (EPM)" bezeichnet. Die kollektive Perzeption erlaubt Aussagen über durch Fahrzeuge belegte und über freie Straßenflächen. Aus EPM kann das Request-Fahrzeug Informationen über die absolute Größe einer Lücke sowie über ihre Position bzw. Geschwindigkeit erhalten.

In manchen Ausführungsbeispielen kann das Identifizieren 110 ferner auf einer dritten Detektion basieren. Die dritte Detektion kann auf Fahrzeug-zu-Fahrzeug-Nachrichten mit Umfeldinformationen des zumindest einen weiteren Fahrzeugs 200 basieren. Die Umfeldinformationen können auf bordeigenen Sensoren des zumindest einen weiteren Fahrzeugs 200 basieren.

Die bordeigenen Sensoren des zumindest einen weiteren Fahrzeugs 200 können beispielsweise zumindest ein Element der Gruppe von Kamerasensor, Radarsensor, Lidarsensor, Laufzeitsensor umfassen. In zumindest manchen Ausführungsbeispielen können die Umfeldinformationen Sensordaten des zumindest einen weiteren Fahrzeugs 200 umfassen, beispielsweise Sensordaten einer kollektiven Wahrnehmung der Umwelt der des zumindest einen weiteren Fahrzeugs. Beispielsweise können die Umfeldinformationen auf Sensoraufnahmen eines Umfelds des zumindest einen weiteren Fahrzeugs 200 von zumindest einem bordeigenen Sensor des zumindest einen weiteren Fahrzeugs 200 basieren. Die Sensordaten können beispielsweise Rohdaten entsprechen, etwa Kamerasensordaten, Radarsensordaten, Lidarsensordaten und/oder Laufzeitsensordaten, oder sie können verarbeiteten Daten entsprechen, etwa einer Entfernung und/oder Position von durch das zumindest eine weitere Fahrzeug 200 erfassten Fremdobjekten.

Beispielsweise kann das Identifizieren 110 die Umfeldinformationen nutzen, um ein virtuelles Blickfeld oder eine virtuelle Sensorabdeckung zu konstruieren, aus einer Kombination von Sensordaten der bordeigenen Sensorik des Fahrzeugs 100 der 2. Detektion und der Sensordaten des zumindest einen weiteren Fahrzeugs der dritten Detektion. Durch eine Kombination der Sensordaten kann die mehrstufige Detektion auch für Positionen, die aus der Sicht der Sensoren des Fahrzeugs 100 verdeckt sind, für das Identifizieren 110 durchgeführt werden.

Wenn nur ein Teil der Fahrzeuge auf dem Fahrstreifen, auf den eingefädelt werden soll, EPM senden, kann ein Teil der vorhandenen Lücken eindeutig identifiziert werden. Es besteht in manchen Fällen eine Einschränkung, dass nicht detektierte ausreichend große Lücken bei dem Identifizieren 110 nicht berücksichtigt sind.

Für einen Zeitraum nach der V2X-Markteinführung werden im Straßenverkehr voraussichtlich V2X-Fahrzeuge verschiedener Generationen sowie nicht mit V2X-Technologie ausgestattete Fahrzeuge zu finden sein. Daher ist die Kombination der oben beschriebenen Verfahren vorteilhaft. Im Sinne der oben beschriebenen Vorgehensweise, kann eine Grobdetektion auf Basis von Statusnachrichten mit einer anschließenden Feindetektion auf Basis der fahrzeugeigenen Bordsensorik und eine Identifizierung von Lücken auf Basis von EPM kombiniert werden.

Das V2X-Fahrzeug 100 mit dem Fahrstreifenwechselwunsch kann eine passive Rolle einnehmen indem es auf Basis einer Analyse der empfangenen Nachrichten eine geeignete Lücke sucht bzw. auf eine geeignete Lücke wartet. Die Fahrzeuge auf dem Fahrstreifen, auf den eingefädelt werden soll, können eine passive oder aktive Rolle einnehmen. In der passiven Rolle senden sie beispielsweise Umfeldnachrichten (Environmental Perception Message, EPM) und zeigen dadurch mögliche Lücken, oder sie senden Statusnachrichten oder keine Nachrichten. In der aktiven Rolle können sie eine geeignete Lücke schaffen, falls diese nicht vorhanden ist (kooperatives Verhalten). Dem liegt beispielsweise eine Relevanzfilterung (beispielsweise durch Verfahrensschritt 220 aus Fig. 5) zugrunde.

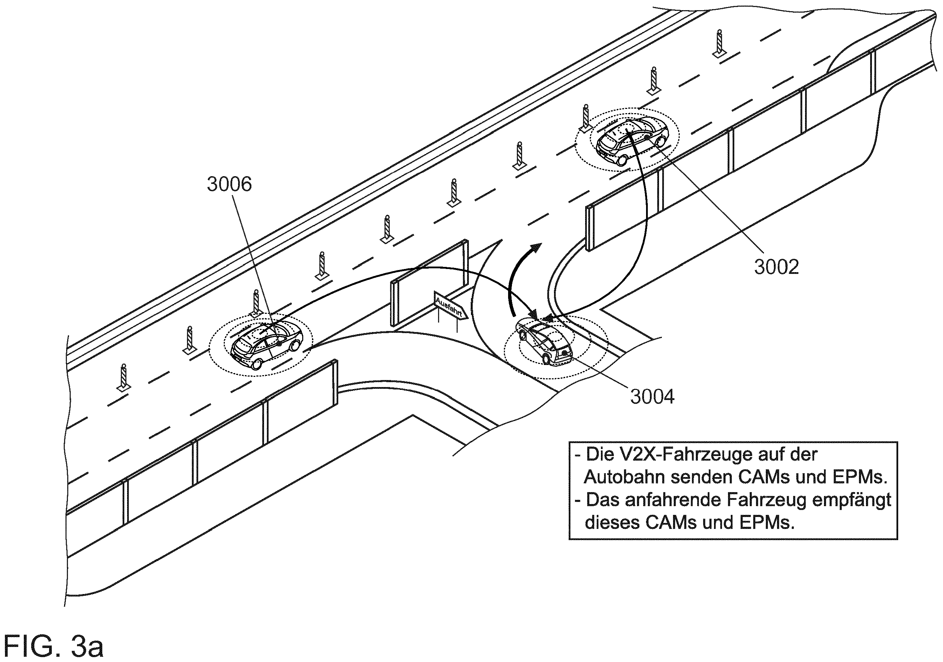

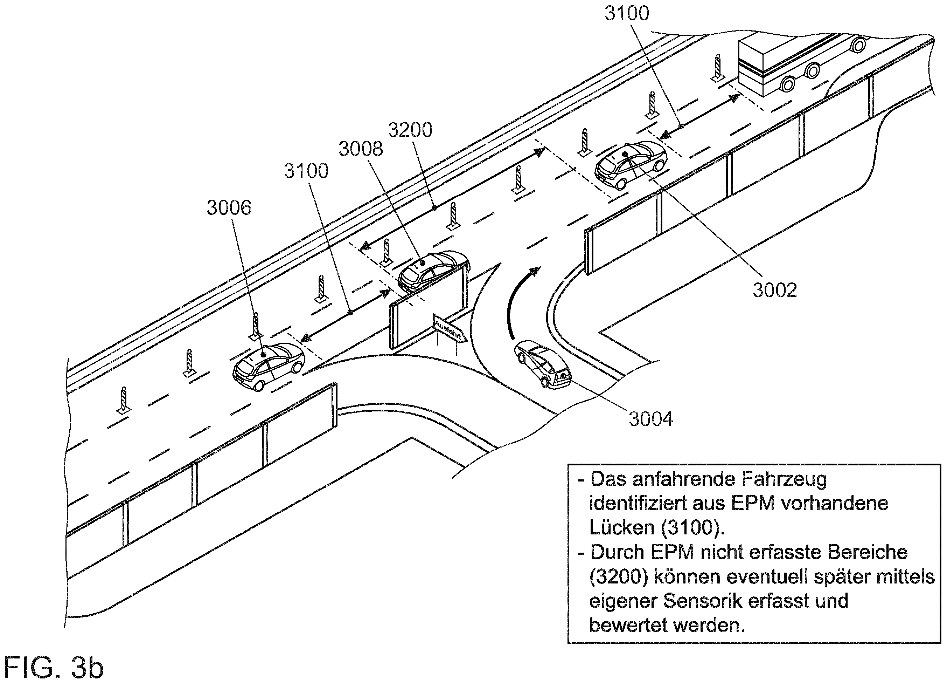

Fign. 3a-e zeigen ein beispielhaftes Ausführungsbeispiel. Die Fahrzeuge 3002, 3004 und 3006 senden Statusnachrichten und Nachrichten mit Umfeldinformationen. Fahrzeug 3004 möchte auf die Autobahn auffahren und erfasst beispielsweise über die Statusnachrichten die Fahrzeuge 3002 und 3006. In Fig. 3b Identifiziert 110 das Fahrzeug 3004 aus den Umfeldinformationen der Fahrzeuge 3002 und 3006 vorhandene Verkehrslücken 3100. Durch die Umfeldinformationen nicht erfasste Bereiche 3200, die beispielsweise durch ein Fahrzeug 3008, das keine Nachrichten mit Umfeldinformationen bereitstellt entstehen kann, kann das Fahrzeug 3004 mit der bordeigenen Sensorik erfassen.

Das Verfahren umfasst ferner ein Längsregeln 120 des Fahrzeugs parallel zur identifizierten Verkehrslücke. Das Längsregeln 120 entspricht in zumindest manchen Ausführungsbeispielen einem Regeln einer Geschwindigkeit des Fahrzeugs 100 in Fahrtrichtung oder einem Regeln einer Position des Fahrzeugs 100 in Fahrtrichtung. In manchen Ausführungsbeispielen kann das Längsregeln 120 automatisiert mittels eines adaptiven Abstandsregeltempomaten (auch engl. ACC, Adaptive Cruise Control) erfolgen. Das Längsregeln 120 kann beispielsweise ein Bereitstellen eines Geschwindigkeits-Zeit-Verlaufs für den adaptiven Abstandsregeltempomaten umfassen. Alternativ oder zusätzlich kann das Längsregeln 120 ein Anzeigen einer Längsregelhilfe für einen Fahrer des Fahrzeugs 100 umfassen. Die Längsregelhilfe kann beispielsweise einer visuellen Hilfe auf einem Bildschirm oder einer Projektionsfläche (etwa einer Über-Kopf-Anzeige, auch engl. Head-Up-Display) entsprechen. Beispielsweise kann die Längsregelhilfe anzeigen, ob der Fahrer des Fahrzeugs zum Erreichen der identifizierten Lücke beschleunigen oder abbremsen soll. Alternativ oder zusätzlich kann die Längsregelhilfe akustischen Ansagen oder Hinweistönen entsprechen. Das Längsregeln 120 kann beispielsweise ferner ein Bereitstellen eines Steuersignals für eine Ausgabeeinrichtung, etwa einen Bildschirm, einen Projektor, oder eine Tonausgabeeinheit umfassen. In manchen Ausführungsbeispielen kann das Fahrzeug 100 einem automatisch fahrenden Fahrzeug entsprechen. Das Längsregeln 120 kann beispielsweise einer Längsregelung des automatisch fahrenden Fahrzeugs 100 basierend auf der identifizierten Verkehrslücke entsprechen.

In der Längsregelungsphase kann das Request-Fahrzeug 100 parallel zur identifizierten Lücke fahren, um dann die dritte Phase einzuleiten. Vorzugsweise erfolgt dies automatisiert mittels eines ACC, bei dem die Kooperative-Fahrstreifenwechsel-Funktion dem ACC-System den notwendigen Geschwindigkeits-Zeit-Verlauf vorgibt. Denkbar sind auch eine rein anzeigende Funktion sowie eine entsprechende Längsregelung eines automatisch fahrenden Fahrzeugs.

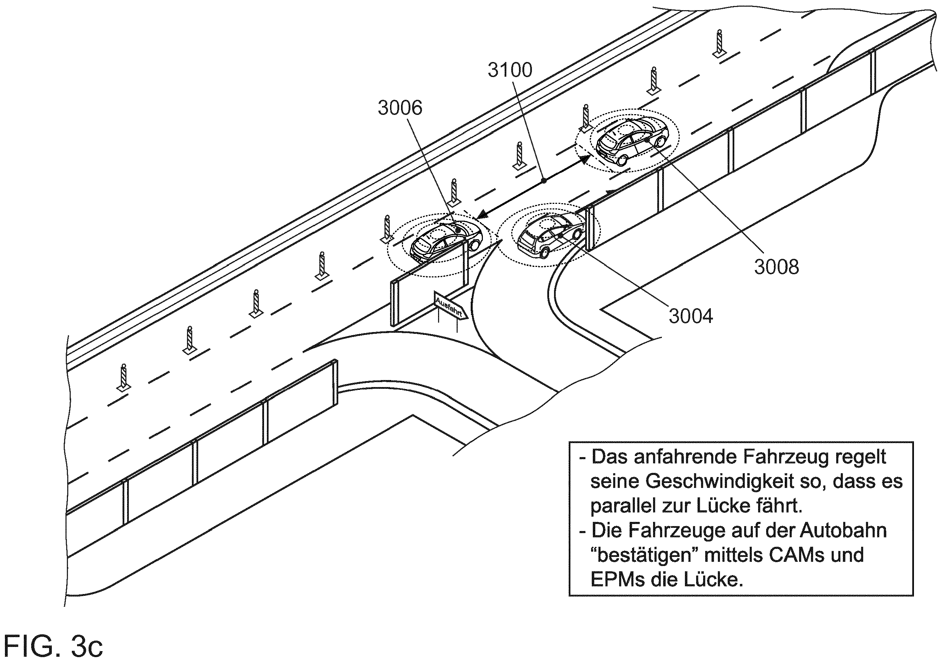

Fig. 3c zeigt eine Fortführung des beispielhaften Ausführungsbeispiels. Das Fahrzeug 3004 befindet sich auf der Auffahrspur und regelt seine Geschwindigkeit so, dass es parallel zur Verkehrslücke 3100 fährt. Die Fahrzeuge auf der Fahrstrecke, etwa das Fahrzeug 3006, können die Verkehrslücke mittels Nachrichten mit Umfeldinformationen bestätigen.

In manchen Ausführungsbeispielen kann das Fahrzeug 100 einem automatisch fahrenden Fahrzeug entsprechen, etwa einem Fahrzeug, das ausgebildet ist, autonom ohne regelmäßigen Fahrereingriff ein Fahrziel zu erreichen. Das Längsregeln 120 kann beispielsweise einer Längsregelung des automatisch fahrenden Fahrzeugs 100 entsprechen.

Das Verfahren umfasst in einigen Ausführungsbeispielen ferner ein Querregeln 130 des Fahrzeugs durch einen Fahrstreifenwechsel parallel zu der identifizierten Verkehrslücke. Das Querregeln 130 kann beispielsweise durchgeführt werden, wenn das Längsregeln 120 das Fahrzeug 100 parallel zur identifizierten Verkehrslücke positioniert hat. In zumindest manchen Ausführungsbeispielen kann das Querregeln 130 einem Regeln einer Position des Fahrzeugs 100 quer zur Fahrtrichtung entsprechen. Das Querregeln 130 kann beispielsweise einem fahrzeugseitig ausgeführten Querregeln oder einem fahrzeugseitig unterstützten Querregeln durch den Fahrer des Fahrzeugs 100 entsprechen. Das Querregeln 130 kann beispielsweise einen fahrerinitiierten automatisierten Fahrstreifenwechsel umfassen. Beispielsweise kann der Fahrer einen Impuls zum Fahrstreifenwechsel geben, und ein Assistenzsystem kann den Fahrstreifenwechsel im Querregeln 130 ausführen. Alternativ oder zusätzlich kann das Querregeln 130 ein Anzeigen einer Querregelhilfe für einen Fahrer des Fahrzeugs 100 umfassen. Beispielsweise kann die Querregelhilfe einem visuellen oder akustischen Hinweis durch eine Ausgabeeinrichtung des Fahrzeugs entsprechen. Beispielsweise kann das Querregeln 130 ein Bereitstellen eines Steuersignals für die Ausgabeeinrichtung umfassen.

In einigen Ausführungsbeispielen kann das Fahrzeug 100 einem automatisch fahrenden Fahrzeug entsprechen. Das Querregeln 130 kann einer Querregelung des automatisch fahrenden Fahrzeugs 100 entsprechen.

In der dritten Phase / Verfahrensschritt (etwa der Querregelung 130) kann das Request-Fahrzeug seinen Fahrstreifenwechsel durchführen. Dies kann manuell erfolgen, gegebenenfalls unterstützt durch entsprechende Hinweise an den Fahrer. Es ist auch ein fahrerinitiierter automatisierter Fahrstreifenwechsel vorstellbar oder auch eine entsprechende Querregelung eines automatisch fahrenden Fahrzeugs. Die Fahrzeuge auf dem Fahrstreifen, auf den eingefädelt werden soll, können in manchen Ausführungsbeispielen ferner eine (unterstützende) passive Rolle haben, indem sie den anfahrenden Fahrzeugen die Lücken über Nachrichten mit Umfeldinformationen regelmäßig "bestätigen".

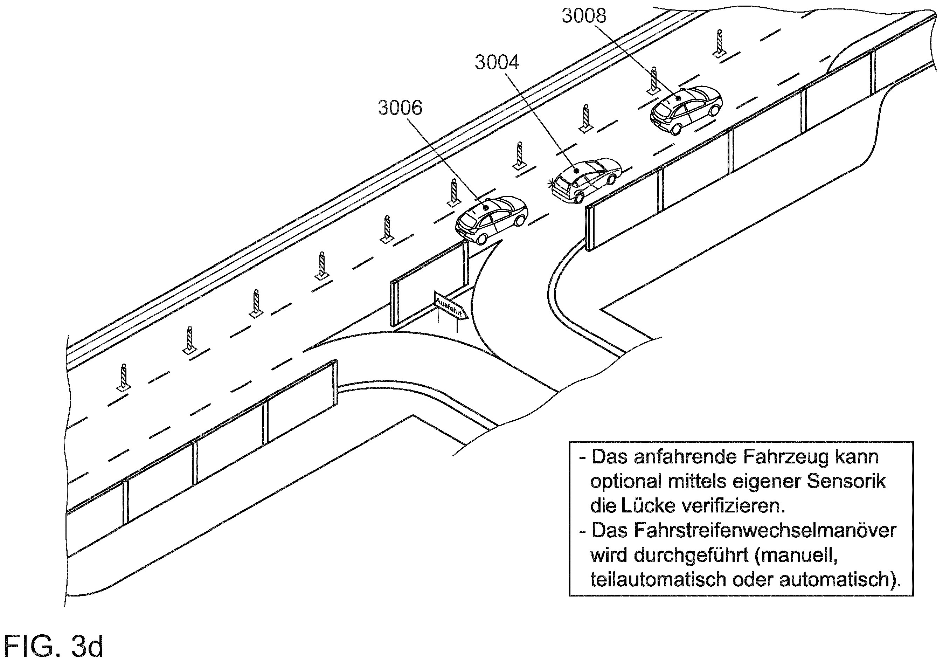

Fig. 3d zeigt eine weitere Fortführung des beispielhaften Ausführungsbeispiels. Fahrzeug 3004 kann beispielsweise die Lücke zwischen den Fahrzeugen 3008 und 3006 durch bordeigene Sensoren im Identifizieren 110 verifizieren und eine Querregelung 130 vornehmen, beispielsweise manuell, teilautomatisiert oder automatisiert.

In zumindest manchen Ausführungsbeispielen können das Identifizieren 110, das Längsregeln 120 und/oder das Querregeln 130 auf Information über Verkehrsregeln und/oder Verkehrsgesetze basieren (Restriktionen). Das Identifizieren 110, das Längsregeln 120 und/oder das Querregeln 130 können so ausgeführt werden, dass die Verkehrsregeln und/oder Verkehrsgesetze nicht gebrochen werden.

In manchen Ausführungsbeispielen (siehe Fig. 1b) kann das Verfahren ferner ein Bestimmen 150 einer Fahrintention eines Fahrers des Fahrzeugs zum Fahrstreifenwechsel umfassen. Beispielsweise kann das Bestimmen 150 ein Bestimmen einer Position des Fahrzeugs 100. Basierend auf der Position des Fahrzeugs und einer digitalen Karte kann das Bestimmen 150 ferner ein Ermitteln eines Straßenabschnitts umfassen. Dem Straßenabschnitt können beispielsweise ein oder mehrere mögliche Fahrintentionen zugeordnet sein. Den ein oder mehreren möglichen Fahrintentionen können ein oder mehrere Auslösebedingungen basierend auf ein oder mehreren Auslöser-Größen (Trigger-Größen) zugeordnet sein. Das Bestimmen 150 kann ferner ein Erhalten von Information über interne Auslöser-Größen für die Bestimmung einer aktuellen Fahrintention, basierend auf bordeigenen Sensoren oder Aktoren des Fahrzeugs umfassen. Zusätzlich kann das Bestimmen 150 ferner ein Erhalten von Information über externe Auslöser-Größen für die Bestimmung der Fahrintention über die Fahrzeug-zu-Fahrzeug-Schnittstelle umfassen. Das Bestimmen 150 der Fahrintention kann ferner ein Bestimmen der Fahrintention basierend auf dem Straßenabschnitt, der Information über die internen und/oder externen Auslöser-Größen und den ein oder mehreren Auslösebedingungen umfassen. Beispielsweise können die Auslösebedingungen Ober- oder Untergrenzen für Auslöser-Größen umfassen, und/oder auf Wahrscheinlichkeitsfunktionen, die auf ein oder mehrere Auslöser-Größen basieren können, basieren.

In einigen Ausführungsbeispielen kann das Verfahren ferner ein Ermitteln 155, dass das Identifizieren 110 keine Verkehrslücke identifiziert, umfassen. Beispielsweise kann das Ermitteln 155 erkennen, dass vor Ende einer Beschleunigungsspur, Auffahrspur oder Abbiegespur das Identifizieren 110 keine Verkehrslücke identifiziert.

Das Verfahren kann ferner ein Senden 160 einer Fahrintentionsnachricht basierend auf dem Bestimmen 150 und/oder dem Erkennen 155 umfassen. Das Senden 160 kann beispielsweise ausgeführt werden, wenn das Bestimmen 150 eine Fahrintention bestimmt und/oder wenn das Erkennen 155 erkennt, dass das Identifizieren 110 keine Verkehrslücke identifiziert. Das Senden 160 kann ferner ein Berechnen der Fahrintentionsnachricht umfassen, basierend auf einem Protokollformat. Das Senden 160 kann einem Senden über die Fahrzeug-zu-Fahrzeug-Schnittstelle entsprechen. Die Fahrintentionsnachricht kann beispielsweise Information über eine prognostizierte Trajektorie der Fahrintention umfassen, beispielsweise als Zeit-PositionsAngabe oder als Angabe eines Zielbereiches der Fahrintention. Die Fahrintentionsnachricht kann beispielsweise eine Information über einen zukünftigen Fahrstreifenwechselwunsch des Fahrzeugs 100 umfassen.

Diese Nachrichten können zusätzlich zu Statusnachrichten oder zusätzlich zu Status- und Umfeldnachrichten gesendet werden. Fig. 2 2006 zeigt eine symbolhafte Darstellung der Fähigkeit zur V2X-Kommunikation eines V2X-Cooperative-Fahrzeugs, ausgebildet zum Senden/Empfangen von Nachrichten Fahrintentionsnachrichten, die eine prognostizierte Trajektorie umfassen. Ein Senden kann etwa erfolgen, wenn das Verfahren für das Request-Fahrzeug 100 seine Intention bestimmt (erkannt) 150 hat oder wenn es im relevanten Bereich keine geeignete Lücke identifiziert 110. Entsprechend einem Verfahrensschritt 220 aus Fig. 5 kann ein Fahrzeug 205 ferner eine Relevanzbeurteilung ausführen und gegebenenfalls eine ausreichend große Lücke schaffen. Die Detektion dieser Lücke kann entsprechend den oben beschriebenen Varianten erfolgen.

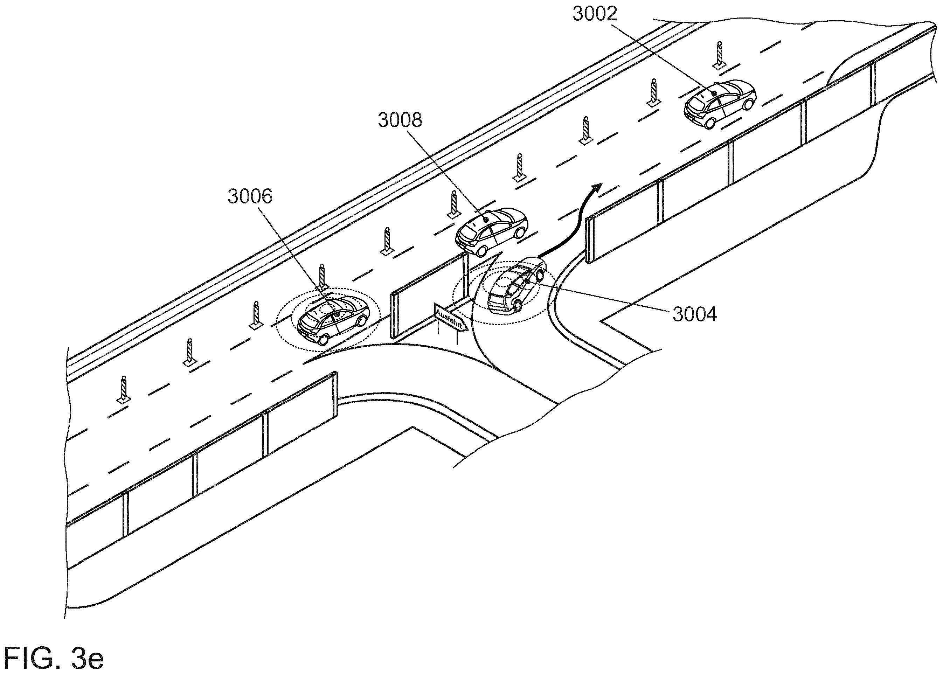

Fig. 3e zeigt eine Fortführung des beispielhaften Ausführungsbeispiels. Beim Auffahren auf die Autobahn kann das Fahrzeug 3004 eine Fahrintentionsnachricht bereitstellen, die von dem Fahrzeug 3006 beispielsweise in einem Verfahrensschritt 220 aus Fig. 5 als relevant eingestuft werden kann.

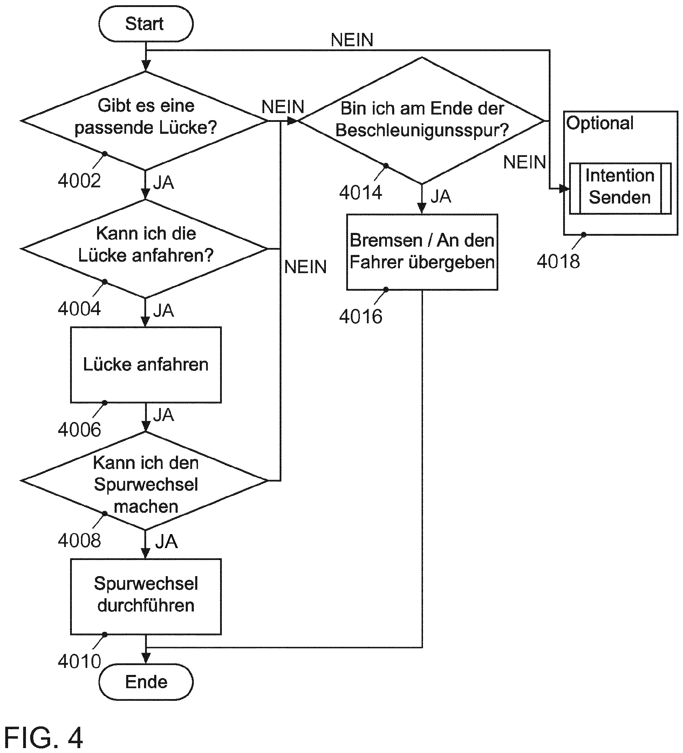

Fig. 4 zeigt ein Flussdiagramm einer beispielhaften Implementierung des Verfahrens. Das Verfahren kann beispielsweise mit dem Identifizieren 4002, ob es eine passende Lücke gibt beginnen, etwa durch das Identifizieren 110. Gibt es eine Lücke, so kann geprüft werden 4004, ob diese Lücke anfahrbar ist. Ist sie anfahrbar, dann kann sie angefahren 4006 werden, etwa durch Längsregeln 120. Dann kann geprüft werden 4008, ob ein Spurwechsel möglich ist. Ist dieser möglich, so kann er durchgeführt werden 4010, etwa durch das Querregeln 130, und das Verfahren beendet werden 4012. Fällt einer der Schritte 4002, 4004 oder 4008 negativ aus, dann kann geprüft werden 4014, ob sich das Fahrzeug am Ende der Beschleunigungsspur befindet. Wenn ja, dann kann gebremst werden oder an den Fahrer übergeben werden 4016 und das Verfahren beendet werden 4012. Wenn nicht, so kann beispielsweise eine Fahrintentionsnachricht bereitgestellt werden 4018, etwa durch ein Bereitstellen 160. Alternativ kann die Fahrintentionsnachricht auch ohne das Identifizieren 4002 bereitgestellt 4018 werden.

In zumindest manchen Ausführungsbeispielen kann das Fahrzeug-zu-Fahrzeug-Kommunikationssystem 10 ferner ein Kontrollmodul 14 umfassen, ausgebildet zum Ausführen der Verfahrensschritte 110 - 150. Ferner kann das Fahrzeug-zu-Fahrzeug-Kommunikationssystem 10 eine Schnittstelle 12 umfassen, die ausgebildet ist, die Bordsensorik des Fahrzeugs zu erhalten. Das Kontrollmodul 14 ist mit der Schnittstelle 12 und der Fahrzeug-zu-Fahrzeug-Schnittstelle 16 gekoppelt.

In Ausführungsbeispielen kann das Kontrollmodul 14, und/oder ein Kontrollmodul 24 aus Fig. 5a, einem beliebigen Controller oder Prozessor oder einer programmierbaren Hardwarekomponente entsprechen. Beispielsweise kann das Kontrollmodul 14; 24 auch als Software realisiert sein, die für eine entsprechende Hardwarekomponente programmiert ist.

Insofern kann das Kontrollmodul 14; 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14; 24 denkbar.

Die Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

Fig. 5 illustriert ein Flussdiagramm eines Beispiels eines Verfahrens für ein Fahrzeug 205, das nicht unter den Schutzbereich der Ansprüche fällt. Fig. 5a illustriert ein Blockdiagramm eines Beispiels eines Fahrzeug-zu-Fahrzeug-Kommunikationssystems 20, das ebenfalls nicht unter den Schutzbereich der Ansprüche fällt, ausgebildet zum Ausführen des Verfahrens. Das Fahrzeug 205 kann beispielsweise in dem zumindest einen weiteren Fahrzeug 200 aus Fig. 1a umfasst sein.

Das Verfahren umfasst Empfangen 210 einer Fahrintentionsnachricht mit einem Fahrstreifenwechselwunsch von einem anfragenden Fahrzeug 100. Das Empfangen 210 kann beispielsweise mittels Fahrzeug-zu-Fahrzeug-Kommunikation erfolgen, beispielsweise über eine Fahrzeug-zu-Fahrzeug-Schnittstelle. In manchen Beispielen kann das Fahrzeug-zu-Fahrzeug-Kommunikationssystem 20 eine Fahrzeug-zu-Fahrzeug-Schnittstelle 22 umfassen, ausgebildet zur Fahrzeug-zu-Fahrzeug-Kommunikation. Das Fahrzeug-zu-Fahrzeug-Kommunikationssystem kann ferner ein Kontrollmodul 24 umfassen, ausgebildet zum Empfangen 210 über die Fahrzeug-zu-Fahrzeug-Schnittstelle 22. Die Fahrzeug-zu-Fahrzeug-Schnittstelle 22 kann mit dem Kontrollmodul 24 gekoppelt sein.

Das Verfahren umfasst ferner Ermitteln 220 einer Information über eine Kooperation in einem kooperativen Fahrmanöver mit dem anfragenden Fahrzeug 100. Die Information über die Kooperation zeigt an, ob das Fahrzeug 205 als Kooperationspartner infrage kommt und ob ein kooperatives Verhalten unter Berücksichtigung der verkehrlichen Situation möglich ist, basierend auf der Fahrintentionsnachricht. In manchen Beispielen kann ferner geprüft/angezeigt werden, ob das kooperative Verhalten basierend auf weiteren Restriktionen möglich ist.

Das Ermitteln 220 kann als Relevanzbeurteilung beispielsweise in mehreren Schritten prüfen, ob das empfangende Fahrzeug als Kooperationspartner prinzipiell infrage kommt und ob ein kooperatives Verhalten unter Berücksichtigung der verkehrlichen Situation sowie weiterer Restriktionen möglich ist. Diese Restriktionen ergeben sich beispielsweise durch die Grenzen der Bereitschaft des Fahrers zur Kooperation und durch andere Ziele, wie ein effizientes Fahren. Beispielsweise kann das Ermitteln 220 auf Information über ein Fahrverhalten eines Fahrers des Fahrzeugs 205 basieren. Das Verfahren kann ferner ein Bestimmen der Information über das Fahrverhalten umfassen, beispielsweise zum Bestimmen einer Fahrdynamik oder einer Überholwahrscheinlichkeit des Fahrers.

Beispielsweise könnte vom Fahrer die maximal zulässige Verzögerung bei der Vergrößerung von Lücken durch die Information über das Fahrverhalten vorgegeben werden. Diese könnte das Bestimmen der Fahrdynamik von seinem Fahrerlebnis ableiten, entsprechend der Möglichkeit bei einem ACC den Abstand zum Vorderfahrzeug in bestimmten Grenzen zu konfigurieren. Auch könnte bestimmt werden, ob Fahrstreifenwechsel für ein kooperatives Manöver in Betracht gezogen werden dürfen oder nicht.

Weiterhin könnte das Verfahren bzw. das Kontrollmodul 24 ausgebildet sein, um eine Abschätzung der Energiebilanz des kooperativen Manövers durchzuführen. Diese könnte durch die Straßentopologie beeinflusst werden und unter Umständen für Fahrzeuge mit Verbrennungsmotor anders ausfallen als für Fahrzeuge mit Elektroantrieb (z. B. bei einer Fahrt bergab). Entsprechend könnte auch hier eine Obergrenze für eine negative Energiebilanz (Energie wird aufgewandt) definiert werden.

Auch könnte die verkehrliche Situation mit ins Kalkül gezogen werden, wie z. B. ob ein Fahrstreifenwechsel aus Sicht der Verkehrssituation möglich ist.

In einem Beispiel ist das Ermitteln 220 zweischrittig.

Schritt 1 des Ermittelns 220 ist beispielhaft:
V2X-Nachrichten werden in manchen Beispielen per Broadcast versendet. Daher kann das Ermitteln 220 für das empfangende Fahrzeug 205 zunächst prüfen, ob es sich überhaupt in einem Straßenabschnitt befindet, der für das kooperative Manöver relevant ist. Hierzu prüft es beispielsweise, wo es sich relativ zum Bereich der potenziellen Kooperation befindet. Als Kooperationspartner kommt es beispielsweise nicht in Frage, wenn es diesen Bereich schon passiert hat oder wenn es sich auf einem nicht betroffenen Fahrstreifen befindet (z. B. wenn auf dem rechten Fahrstreifen eingefädelt werden soll, es sich aber auf dem linken befindet oder wenn es auf der Gegenfahrbahn fährt). Bei positiver Prüfung kann der nächste Schritt folgen, andernfalls ein Abbruch der Relevanzbeurteilung.

Schritt 2 des Ermittelns 220 ist beispielhaft:
Das Ermitteln 220 kann abschätzen, ob eine Geschwindigkeit des Fahrzeugs 205 als Accept-Fahrzeug und die des Request-Fahrzeugs zusammen passen, so dass eine Kooperation möglich ist. Dabei kann es von seiner aktuellen (in Abhängigkeit vom Automatisierungsgrad auch von seiner geplanten) Geschwindigkeit sowie von einer prognostizierten Geschwindigkeit des Request-Fahrzeugs ausgehen. Diese Prognose kann zum einen auf den vom Request-Fahrzeug empfangenen Nachrichten und zum anderen auf einer Analyse der Straßen- und Verkehrssituation, in der sich das Request-Fahrzeug befindet (zulässige Höchstgeschwindigkeit, Straßenverlauf aus digitaler Karte oder ermittelt aus den eigenen Bordsensorik, Geschwindigkeit der Fahrzeuge vor dem Request-Fahrzeug bzw. Auswertung von deren V2X-Nachrichten). Wenn die Geschwindigkeiten zusammenpassen, kann der nächste Schritt folgen, andernfalls kann ein Abbruch der Relevanzbeurteilung erfolgen.

Ein Abbruch könnte z. B. erfolgen, wenn das Fahrzeug zu langsam oder zu weit entfernt ist und das Request-Fahrzeug sein Fahrstreifenwechselmanöver wahrscheinlich schon durchgeführt hat, wenn das Fahrzeug den relevanten Bereich erreicht. Entsprechend könnte auch abgebrochen werden, wenn das Fahrzeug zu schnell ist oder schon zu nah.

Das Verfahren umfasst ferner Bestimmen 230 von Information über ein Fahrmanöver für eine Manöverplanung. Die Information über das Fahrmanöver kann beispielsweise eine Trajektorie eines Fahrmanövers, beispielsweise als Zeit-Positions-Kette umfassen. Die Manöverplanung findet in zumindest manchen Beispielen ebenfalls in mehreren Schritten stattfinden. Das Bestimmen 230 umfasst Ermitteln 232 von Information über zumindest einen Abstand zu einem Vorderfahrzeug und/oder einem Hinterfahrzeug um ein Berechnen, ob dem Fahrstreifenwechselwunsch in einem möglichen Kooperationsbereich entsprochen werden kann, zu ermöglichen. Das Bestimmen kann beispielsweise ermitteln 232, inwieweit der Abstand zu seinem Vorderfahrzeug und gegebenenfalls auch zu seinem Hinterfahrzeug bei der aktuell gefahrenen Geschwindigkeit für ein Fahrstreifenwechselmanöver angepasst werden muss. Sollte die Länge des Request-Fahrzeugs (und eventueller Anhänger, Auflieger, o.ä.) übermittelt worden sein, etwa in der Fahrintentionsnachricht oder durch Status-Nachrichten des Request-Fahrzeugs, kann diese berücksichtigt werden.

Das Bestimmen 230 umfasst ferner Ermitteln 234 einer Ausführung des Fahrmanövers, basierend auf der Information über das Fahrmanöver, der Information über den zumindest einen Abstand, einer Geschwindigkeit des Fahrzeugs 205 und einer Entfernung zum möglichen Kooperationsbereich. Auf Basis des Ergebnisses der vorangegangenen Schritte kann das Ermitteln 234 unter Berücksichtigung seiner Geschwindigkeit und Entfernung zum möglichen Kooperationsbereich ermitteln, welche Ausführung des Fahrmanövers (z. B. Verzögerung-Zeit-Verlauf) für die Kooperation erforderlich wäre.

Das Bestimmen 230 umfasst ferner Berechnen 236, ob das Fahrmanöver unter Berücksichtigung der verkehrlichen Situation (und beispielsweise der weiteren Restriktionen) möglich ist. Das Berechnen 236, ob dieses Fahrmanöver unter Berücksichtigung der Restriktionen (vgl. oben) möglich ist. Bei negativem Prüfungsergebnis kann ein Abbruch der Manöverplanung erfolgen.

Das Verfahren umfasst ferner Bereitstellen 240 einer Fahrassistenz zum Ausführen des Fahrmanövers. Das Bereitstellen 240 der Fahrassistenz kann beispielsweise einem automatisierten Ausführen des Fahrmanövers entsprechen, beispielsweise über ein Fahrassistenzsystem oder durch Anpassung eines automatisch fahrenden Fahrzeugs. Alternativ oder zusätzlich kann das Bereitstellen 240 der Fahrassistenz einem Bereitstellen von Hinweisen zur Durchführung des Fahrmanövers für einen Fahrer des Fahrzeugs 205 über eine Mensch-Maschine-Schnittstelle entsprechen. Die Mensch-Maschine-Schnittstelle kann beispielsweise einem Bildschirm, einem Projektor oder einem Tonausgabemodul entsprechen. Das Fahrzeug-zu-Fahrzeug-Kommunikationssystem 20 kann beispielsweise die Mensch-Maschine-Schnittstelle umfassen. Die Hinweise können beispielsweise weise gesprochenen Anweisungen, Tonsignalen und/oder visuellen Darstellung der Hinweise entsprechen.

In manchen Beispielen kann das Bereitstellen 240 ferner ein Längsregeln und/oder ein Querregeln umfassen, basierend auf der Fahrintentionsnachrichten und Statusnachrichten des zumindest einen weiteren Fahrzeugs, Umfeldinformationen der zumindest einen weiteren Fahrzeugs und/oder Sensordaten des Fahrzeugs 205.

Je nach Automatisierungsgrad kann das Fahrzeug 205 das geplante Manöver automatisiert durchführen, das Bereitstellen 240 kann ebenfalls den Fahrer über ein geeignetes HMI informieren, oder es kann bei einem manuellen Betreib des Fahrzeugs den Fahrer zur Durchführung des kooperativen Manövers auffordern. Dazu kann es geeignete Hinweise über ein entsprechendes HMI bereitstellen 240.

Bei einer positiven Relevanzbeurteilung und erfolgreichen Manöverplanung kann das Fahrzeug 205 zu einem Accept-Fahrzeug werden. Falls nötig kann es eine ausreichend große Lücke schaffen. Dazu hat es prinzipiell drei Möglichkeiten: Bremsen, Beschleunigen und Fahrstreifenwechsel. Die so entstehende Lücke wird durch das Request-Fahrzeug detektiert und dann angesteuert. Dabei können gegebenenfalls weitere Accept- und Acknowledge-Nachrichten ausgetauscht werden. Das Bereitstellen 240 kann ferner ein Bereitstellen eines Steuersignals zum Steuern der Brems-, Beschleunigungs- oder Fahrstreifenwechselfunktionalität umfassen, beispielsweise über eine Schnittstelle, etwa einen Kontroll-Netzwerk-Bus (auch engl. Controller Area Network Bus, CAN Bus) des Fahrzeugs 205. Das Fahrzeug-zu-Fahrzeug-Kommunikationssystem kann die Schnittstelle umfassen.

Beim kooperativen Manöver des Accept-Fahrzeugs lassen sich verschiedene Varianten abhängig von der V2X-Fahrzeugausstattung unterscheiden.

In manchen Beispielen entspricht die Fahrzeug-zu-Fahrzeug-Schnittstelle 22 einem V2X-Basissystem. Das Accept-Fahrzeug kann in dieser Variante beispielsweise eine passive Rolle wahrnehmen, in der es lediglich Statusnachrichten sendet und keine kooperativen Manöver ausführt. Es ist aber auch in speziellen Situationen eine aktive Rolle möglich, in der das Accept-Fahrzeug Lücken schafft (kooperatives Verhalten). Solch eine Situation kann z. B. an Auffahrten oder vor Sperrungen von Fahrstreifen bestehen. Grundlage dazu ist beispielsweise eine Analyse und Interpretation der Verkehrssituation, die Ableitung des Bedarfs anderer Verkehrsteilnehmer und die Beurteilung der eigenen Handlungsoptionen (Relevanzbeurteilung, Ermitteln 220). Da auf Basis von Statusnachrichten das Accept-Fahrzeug in manchen Beispielen nicht alle Fahrzeuge auf der Auffahrt erfassen kann, wird es auf die ihm bekannten Fahrzeuge reagieren können. Zu den durch Statusnachrichten detektierten Fahrzeugen kommen prinzipiell noch diejenigen, welche durch entsprechende bordeigene Sensorik (z. B. Kamera, Radar, Laser) detektiert werden, wenn sich die Fahrzeuge im Detektionsbereich der Sensorik befinden. Somit ist ein kooperatives Verhalten gegenüber zumindest einem Teil der Fahrzeuge möglich. Zusätzlich kann ein Nachrichtenaustausch mit Bestätigungen der geplanten Manöver (Lücke schaffen, Fahrstreifenwechsel/Einfädeln) stattfinden.

Alternativ kann das Fahrzeug 205 über die Fahrzeug-zu-Fahrzeug-Schnittstelle zusätzlich zu den Statusnachrichten auch Nachrichten mit Umfeldinformationen (EPM) erhalten. Das Accept-Fahrzeug kann auch in dieser Variante eine passive Rolle wahrnehmen, in der es Statusnachrichten sowie EPM sendet und keine kooperativen Manöver ausführt.

Es ist aber auch entsprechend in speziellen Situationen (z. B. an Auffahrten oder vor Sperrungen von Fahrstreifen) eine aktive Rolle möglich, in der das Accept-Fahrzeug Lücken schafft (kooperatives Verhalten), etwa durch Bereitstellen 240. Grundlage dazu ist beispielhaft wiederum eine Analyse und Interpretation der Verkehrssituation, die Ableitung des Bedarfs anderer Verkehrsteilnehmer und die Beurteilung der eigenen Handlungsoptionen (Relevanzfilterung, 220-230). Bei einer nur teilweisen Ausstattung der Fahrzeuge mit V2X-Systemen gilt sinngemäß die Aussage von oben, dass in manchen Fällen nicht alle Fahrzeuge erkannt werden können und ein kooperatives Verhalten gegenüber zumindest einem Teil der Fahrzeuge möglich ist.

Es ist vorstellbar, dass mehrere hintereinander fahrende Fahrzeuge eine Relevanzprüfung mit positivem Ergebnis abschließen. Weiterhin ist vorstellbar, dass für ein kooperatives Manöver Koordinierungsnachrichten (z. B. Accept- und Acknowledge-Nachrichten (Übereinstimmungs- und Bestätigungsnachrichten), Session-ID (Vorgangs-Identifikation)) ausgetauscht werden. Auch könnten die beteiligten Fahrzeuge mit unterschiedlichen Generationen von V2X-Technologie ausgestattet sein. Somit sind in Beispielen verschiedene Varianten denkbar.

In manchen Beispielen werden keine Koordinierungsnachrichten ausgetauscht. Als Resultat können beispielsweise mehrere Fahrzeuge eine Lücke erzeugen, die für den Fahrstreifenwechselvorgang geeignet ist. Das Request-Fahrzeug könnte sich eine Lücke aussuchen.

Alternativ könnten Koordinierungsnachrichten ausgetauscht werden: Die Fahrzeuge können während der Relevanzbeurteilung (Ermitteln 220) und parallel zu den o. g. Schritten (230, 240) prüfen, ob andere Fahrzeuge schon für das Request-Fahrzeug (Zuordnung z. B. durch eine vom Request-Fahrzeug gesendete Session-ID) eine Accept-Nachricht senden. Bei positiver Prüfung kann ein Abbruch der Manöverplanung erfolgen. Bei negativem Prüfungsergebnis kann das Fahrzeug selbst eine Accept-Nachricht bereitstellen.

In zumindest einigen Beispielen kann das Verfahren ferner einen Austausch von Fahrzeug-zu-Fahrzeug-Koordinierungsnachrichten zur Koordination des kooperativen Fahrmanövers mit zumindest einem weiteren Fahrzeug 200 umfassen. Das Bereitstellen 240 kann ferner ein Bereitstellen einer Nachricht über ein Akzeptieren des Fahrstreifenwechselwunschs für das anfragende Fahrzeug 100 und das zumindest eine weitere Fahrzeug 200 umfasst (Accept-Nachricht). Bei Empfangen einer Nachricht über ein Akzeptieren des Fahrstreifenwechselwunschs von einem Fahrzeug des zumindest einen weiteren Fahrzeugs 200 kann beispielsweise das Ermitteln 220, Bestimmen 230 und/oder Bereitstellen 240 abgebrochen werden.

Ein weiteres Ausführungsbeispiel ist ein Computerprogramm zur Durchführung zumindest des Verfahrens, wie es im Zusammenhang mit den Fign. 1 bis 4 beschrieben wird, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass das im Zusammenhang mit den Fign. 1 bis 4 beschriebene Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Bestimmung einer Verkehrslücke zwischen zwei Fahrzeugen für einen Fahrstreifenwechsel für ein Fahrzeug (100), umfassend
Identifizieren (110) der Verkehrslücke basierend auf einer ersten Detektion, die auf zumindest einer Fahrzeug-zu-Fahrzeug-Statusnachricht zumindest eines weiteren Fahrzeugs (200) basiert, wobei durch die erste Detektion ein Bereich im ankommenden Verkehr ermittelt wird, in dem mit einer ausreichend hohen Wahrscheinlichkeit die Verkehrslücke zu finden sein wird;
Längsregeln (120) des Fahrzeugs parallel zu der durch die erste Detektion mit ausreichend hoher Wahrscheinlichkeit identifizierten Verkehrslücke; und
Identifizieren (110) der Verkehrslücke basierend auf einer zweiten Detektion, die auf einer Bordsensorik des Fahrzeugs (100) basiert, wenn durch das Längsregeln (120) die mit ausreichend hoher Wahrscheinlichkeit identifizierte Verkehrslücke in einen Erfassungsbereich der Bordsensorik gekommen ist.

2. Das Verfahren gemäß Anspruch 1, wobei die zumindest eine Fahrzeug-zu-Fahrzeug-Statusnachricht Information über eine Position und/oder eine Trajektorie des zumindest einen weiteren Fahrzeugs (200) umfasst, und wobei die erste Detektion auf der Information über die Position und/oder die Trajektorie des zumindest einen weiteren Fahrzeugs (200) basiert.

3. Das Verfahren gemäß einem der vorhergehenden Ansprüche, wobei das Identifizieren ferner auf einer dritten Detektion basierend auf Fahrzeug-zu-Fahrzeug-Nachrichten mit Umfeldinformationen des zumindest einen weiteren Fahrzeuges (200) basiert, wobei die Umfeldinformationen auf Sensoraufnahmen eines Umfelds des zumindest einen weiteren Fahrzeugs (200) von zumindest einem bordeigenen Sensor des zumindest einen weiteren Fahrzeugs (200) basieren.

4. Das Verfahren gemäß einem der vorhergehenden Ansprüche, ferner umfassend Querregeln (130) des Fahrzeugs durch einen Fahrstreifenwechsel, wenn das Fahrzeug parallel zu der identifizierten Verkehrslücke ausgerichtet ist.

5. Das Verfahren gemäß Anspruch 4,
wobei das Längsregeln (120) einem Regeln einer Geschwindigkeit oder einer Position des Fahrzeugs (100) in Fahrtrichtung entspricht.

6. Das Verfahren gemäß einem der Ansprüche 4 oder 5, wobei das Längsregeln (120) ein Bereitstellen eines Geschwindigkeits-Zeit-Verlaufs für einen adaptiven Abstandsregeltempomaten umfasst.

7. Das Verfahren gemäß einem der Ansprüche 4 oder 5, wobei das Längsregeln (120) ein Anzeigen einer Längsregelhilfe für einen Fahrer des Fahrzeugs (100) umfasst.

8. Das Verfahren gemäß einem der Ansprüche 4 oder 5, wobei das Fahrzeug (100) einem automatisch fahrenden Fahrzeug entspricht, und wobei das Längsregeln (120) einer Längsregelung des automatisch fahrenden Fahrzeugs (100) basierend auf der identifizierten Verkehrslücke entspricht.

9. Das Verfahren gemäß einem der Ansprüche 4 bis 8, wobei das Querregeln (130) einem Regeln einer Position des Fahrzeugs (100) quer zur Fahrtrichtung entspricht.

10. Das Verfahren gemäß einem der Ansprüche 4 bis 9, wobei das Querregeln (130) durchgeführt wird, wenn das Längsregeln (120) das Fahrzeug (100) parallel zur identifizierten Verkehrslücke positioniert hat.

11. Das Verfahren gemäß einem der Ansprüche 4 bis 10, wobei das Querregeln (130) einen fahrerinitiierten automatisierten Fahrstreifenwechsel umfasst,
oder wobei das Querregeln (130) ein Anzeigen einer Querregelhilfe für einen Fahrer des Fahrzeugs (100) umfasst,
oder wobei das Fahrzeug (100) einem automatisch fahrenden Fahrzeug entspricht, und wobei das Querregeln (130) einer Querregelung des automatisch fahrenden Fahrzeugs (100) entspricht.

12. Das Verfahren gemäß einem der vorhergehenden Ansprüche, ferner umfassend Bestimmen (150) einer Fahrintention eines Fahrers des Fahrzeugs zum Fahrstreifenwechsel,
und/oder Ermitteln (155), dass das Identifizieren (110) keine Verkehrslücke identifiziert.

13. Das Verfahren gemäß Anspruch 12, ferner umfassend Senden (160) einer Fahrintentionsnachricht basierend auf dem Bestimmen (150) und/oder dem Ermitteln (155), wobei die Fahrintentionsnachricht eine Information über einen zukünftigen Fahrstreifenwechselwunsch des Fahrzeugs (100) umfasst.

14. System (10) für ein Fahrzeug (100), ausgebildet zum
Identifizieren (110) der Verkehrslücke basierend auf einer ersten Detektion, die auf zumindest einer Fahrzeug-zu-Fahrzeug-Statusnachricht zumindest eines weiteren Fahrzeugs (200) basiert, wobei durch die erste Detektion ein Bereich im ankommenden Verkehr ermittelt wird, in dem mit einer ausreichend hohen Wahrscheinlichkeit die Verkehrslücke zu finden sein wird;
Längsregeln (120) des Fahrzeugs parallel zu der durch die erste Detektion mit ausreichend hoher Wahrscheinlichkeit identifizierten Verkehrslücke; und
Identifizieren (110) der Verkehrslücke basierend auf einer zweiten Detektion, die auf einer Bordsensorik des Fahrzeugs (100) basiert, wenn durch das Längsregeln (120) die mit ausreichend hoher Wahrscheinlichkeit identifizierte Verkehrslücke in einen Erfassungsbereich der Bordsensorik gekommen ist.

## Claims

1. Method for determining a traffic gap between two vehicles for a lane change for a vehicle (100), comprising identification (110) of the traffic gap on the basis of a first detection which is based on at least one vehicle-to-vehicle status message from at least one further vehicle (200), wherein, using the first detection, an area is determined in the oncoming traffic in which the traffic gap will be found with a sufficiently high probability;
longitudinal control (120) of the vehicle in parallel with the traffic gap identified with a sufficiently high probability using the first detection; and
identification (110) of the traffic gap on the basis of a second detection which is based on an on-board sensor system of the vehicle (100), when the traffic gap identified with a sufficiently high probability has entered a detection range of the on-board sensor system due to the longitudinal control (120).

2. The method according to claim 1, wherein the at least one vehicle-to-vehicle status message comprises information about a position and/or a trajectory of the at least one further vehicle (200), and wherein the first detection is based on the information about the position and/or the trajectory of the at least one further vehicle (200).

3. The method according to any one of the preceding claims, wherein the identification is further based on a third detection based on vehicle-to-vehicle messages with environmental information of the at least one further vehicle (200), wherein the environmental information is based on sensor recordings of an environment of the at least one further vehicle (200) from at least one on-board sensor of the at least one further vehicle (200).

4. The method according to any one of the preceding claims, further comprising lateral control (130) of the vehicle via a lane change when the vehicle is oriented in parallel with the identified traffic gap.

5. The method according to claim 4,
wherein the longitudinal control (120) corresponds to control of a speed or a position of the vehicle (100) in the direction of travel.

6. The method according to any one of claims 4 or 5, wherein the longitudinal control (120) comprises providing a speed-time curve for an adaptive cruise control.

7. The method according to any one of claims 4 or 5, wherein the longitudinal control (120) comprises displaying a longitudinal control aid for a driver of the vehicle (100).

8. The method according to any one of claims 4 or 5, wherein the vehicle (100) corresponds to an automatically driving vehicle, and wherein the longitudinal control (120) corresponds to longitudinal control of the automatically driving vehicle (100) on the basis of the identified traffic gap.

9. The method according to any one of claims 4 to 8, wherein the lateral control (130) corresponds to control of a position of the vehicle (100) transversely to the direction of travel.

10. The method according to any one of claims 4 to 9, wherein the lateral control (130) is performed when the longitudinal control (120) has positioned the vehicle (100) in parallel with the identified traffic gap.

11. The method according to any one of claims 4 to 10, wherein the lateral control (130) comprises a driver-initiated automated lane change,
or wherein the lateral control (130) comprises displaying a lateral control aid for a driver of the vehicle (100),
or wherein the vehicle (100) corresponds to an automatically driving vehicle, and wherein the lateral control (130) corresponds to lateral control of the automatically driving vehicle (100).

12. The method according to any one of the preceding claims, further comprising determining (150) a driving intention of a driver of the vehicle to change lanes, and/or ascertaining (155) that the identification (110) does not identify any traffic gap.

13. The method according to claim 12, further comprising sending (160) a driving intention message on the basis of the determining (150) and/or the ascertaining (155), wherein the driving intention message comprises information about a future lane change request of the vehicle (100).

14. System (10) for a vehicle (100), designed to identify (110) the traffic gap on the basis of a first detection which is based on at least one vehicle-to-vehicle status message from at least one further vehicle (200), wherein, using the first detection, an area is determined in the oncoming traffic in which the traffic gap will be found with a sufficiently high probability;
longitudinal control (120) of the vehicle in parallel with the traffic gap identified with a sufficiently high probability using the first detection; and
identification (110) of the traffic gap on the basis of a second detection which is based on an on-board sensor system of the vehicle (100), when the traffic gap identified with a sufficiently high probability has entered a detection range of the on-board sensor system due to the longitudinal control (120).

## Revendications

1. Procédé permettant la détermination d'un espace de circulation entre deux véhicules pour un changement de voie pour un véhicule (100), comprenant l'identification (110) de l'espace de circulation sur la base d'une première détection basée sur au moins un message d'état de véhicule à véhicule d'au moins un autre véhicule (200), dans lequel la première détection établit une zone dans la circulation entrante dans laquelle l'espace de circulation pourra être trouvé avec une probabilité suffisamment élevée ;
le contrôle longitudinal (120) du véhicule parallèlement à l'espace de circulation identifié avec une probabilité suffisamment élevée par la première détection ; et
l'identification (110) de l'espace de circulation sur la base d'une deuxième détection basée sur un système de capteurs embarqués du véhicule (100) lorsque, par le contrôle longitudinal (120), l'espace de circulation identifié avec une probabilité suffisamment élevée est entré dans une zone de détection du système de capteurs embarqués.

2. Procédé selon la revendication 1, dans lequel l'au moins un message d'état de véhicule à véhicule comprend des informations sur une position et/ou une trajectoire de l'au moins un autre véhicule (200), et dans lequel la première détection est basée sur les informations sur la position et/ou la trajectoire de l'au moins un autre véhicule (200).

3. Procédé selon l'une des revendications précédentes, dans lequel l'identification est en outre basée sur une troisième détection basée sur des messages de véhicule à véhicule comportant des informations d'environnement de l'au moins un autre véhicule (200), dans lequel les informations d'environnement sont basées sur des enregistrements de capteur d'un environnement de l'au moins un autre véhicule (200) par au moins un capteur embarqué de l'au moins un autre véhicule (200).

4. Procédé selon l'une des revendications précédentes, comprenant en outre le contrôle transversal (130) du véhicule par un changement de voie lorsque le véhicule est aligné parallèlement à l'espace de circulation identifié.

5. Procédé selon la revendication 4,
dans lequel le contrôle longitudinal (120) correspond à un contrôle d'une vitesse ou d'une position du véhicule (100) dans la direction de déplacement.

6. Procédé selon l'une des revendications 4 ou 5, dans lequel le contrôle longitudinal (120) comprend une fourniture d'une courbe vitesse-temps à un régulateur de distance adaptatif.

7. Procédé selon l'une des revendications 4 ou 5, dans lequel le contrôle longitudinal (120) comprend un affichage d'une aide au contrôle longitudinal pour un conducteur du véhicule (100).

8. Procédé selon l'une des revendications 4 ou 5, dans lequel le véhicule (100) correspond à un véhicule à conduite automatique, et dans lequel le contrôle longitudinal (120) correspond à un contrôle longitudinal du véhicule à conduite automatique (100) sur la base de l'espace de circulation identifié.

9. Procédé selon l'une des revendications 4 à 8, dans lequel le contrôle transversal (130) correspond à un contrôle d'une position du véhicule (100) transversalement au sens de déplacement.

10. Procédé selon l'une des revendications 4 à 9, dans lequel le contrôle transversal (130) est effectué lorsque le contrôle longitudinal (120) a positionné le véhicule (100) parallèlement à l'espace de circulation identifié.

11. Procédé selon l'une des revendications 4 à 10, dans lequel le contrôle transversal (130) comprend un changement de voie automatisé initié par le conducteur,
ou dans lequel le contrôle transversal (130) comprend un affichage d'une aide au contrôle transversal pour un conducteur du véhicule (100),
ou dans lequel le véhicule (100) correspond à un véhicule à conduite automatique, et dans lequel le contrôle transversal (130) correspond à un contrôle transversal du véhicule à conduite automatique (100).

12. Procédé selon l'une des revendications précédentes, comprenant en outre la détermination (150) d'une intention de conduite d'un conducteur du véhicule pour changer de voie, et/ou l'établissement (155) que l'identification (110) n'identifie pas d'espace de circulation.

13. Procédé selon la revendication 12, comprenant en outre l'envoi (160) d'un message d'intention de conduite basé sur la détermination (150) et/ou l'établissement (155), dans lequel le message d'intention de conduite comprend une information concernant un souhait de changement de voie futur du véhicule (100).

14. Système (10) pour un véhicule (100), conçu pour l'identification (110) de l'espace de circulation sur la base d'une première détection qui est basée sur au moins un message d'état de véhicule à véhicule d'au moins un autre véhicule (200), dans lequel la première détection établit une zone dans la circulation entrante dans laquelle l'espace de circulation pourra être trouvé avec une probabilité suffisamment élevée ;
le contrôle longitudinal (120) du véhicule parallèlement à l'espace de circulation identifié avec une probabilité suffisamment élevée par la première détection ; et
l'identification (110) de l'espace de circulation sur la base d'une deuxième détection basée sur un système de capteurs embarqués du véhicule (100) lorsque, par le contrôle longitudinal (120), l'espace de circulation identifié avec une probabilité suffisamment élevée est entré dans une zone de détection du système de capteurs embarqués.
